(19) **Europäisches Patentamt**
**European Patent Office**
**Office européen des brevets**

(11) **EP 2 021 205 B1**

(12) **EUROPÄISCHE PATENTSCHRIFT**

(45) Veröffentlichungstag und Bekanntmachung des Hinweises auf die Patenterteilung:
**18.10.2017 Patentblatt 2017/42**

(51) Int Cl.:
**B60L 13/03** *(2006.01)* **H02J 3/00** *(2006.01)*

(21) Anmeldenummer: **06753247.3**

(22) Anmeldetag: **31.05.2006**

(86) Internationale Anmeldenummer:
**PCT/DE2006/000972**

(87) Internationale Veröffentlichungsnummer:
**WO 2007/137539 (06.12.2007 Gazette 2007/49)**

(54) **ANORDNUNG MIT ZUMINDEST ZWEI FAHRWEGBEZOGENEN FAHRWEGKOMPONENTEN EINES SPURGEFÜHRTEN FAHRWEGES SOWIE MIT EINER TRAFOSTATION**

SYSTEM COMPRISING AT LEAST TWO GUIDEWAY-RELATED GUIDEWAY COMPONENTS OF A TRACK GUIDEWAY AND A TRANSFORMER STATION

DISPOSITIF COMPORTANT AU MOINS DEUX COMPOSANTS DE VOIE LIÉS À LA VOIE, D'UNE VOIE À RAILS, AINSI QU'UNE STATION DE TRANSFORMATEUR

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**11.02.2009 Patentblatt 2009/07**

(73) Patentinhaber: **Siemens Aktiengesellschaft 80333 München (DE)**

(72) Erfinder:
• **GLAUBITZ, Wilfried**
**91077 Neunkirchen (DE)**
• **GRESS, Jürgen**
**91207 Lauf (DE)**
• **SPAETH, Wolfgang**
**90513 Zirndorf (DE)**

(56) Entgegenhaltungen:
**DE-A1- 19 723 233     GB-A- 2 383 696
US-A- 1 774 645      US-A- 5 563 455**

**Beschreibung**

Die Erfindung bezieht sich auf eine Anordnung mit den Merkmalen gemäß dem Oberbegriff des Anspruchs 1.

Bekanntermaßen werden spurgeführte Fahrwege wie Eisenbahnstrecken oder Magnetschwebebahnstrecken mit fahrwegbezogenen Fahrwegkomponenten ausgestattet. Diese werden üblicherweise mit elektrischer Energie versorgt, die von einer mit den Fahrwegkomponeriten in Verbindung stehenden Trafostation geliefert wird. Bei den Fahrwegkomponenten kann es sich beispielsweise um Weichen, Kommunikationseinrichtungen, Signaleinrichtungen oder dergleichen handeln.

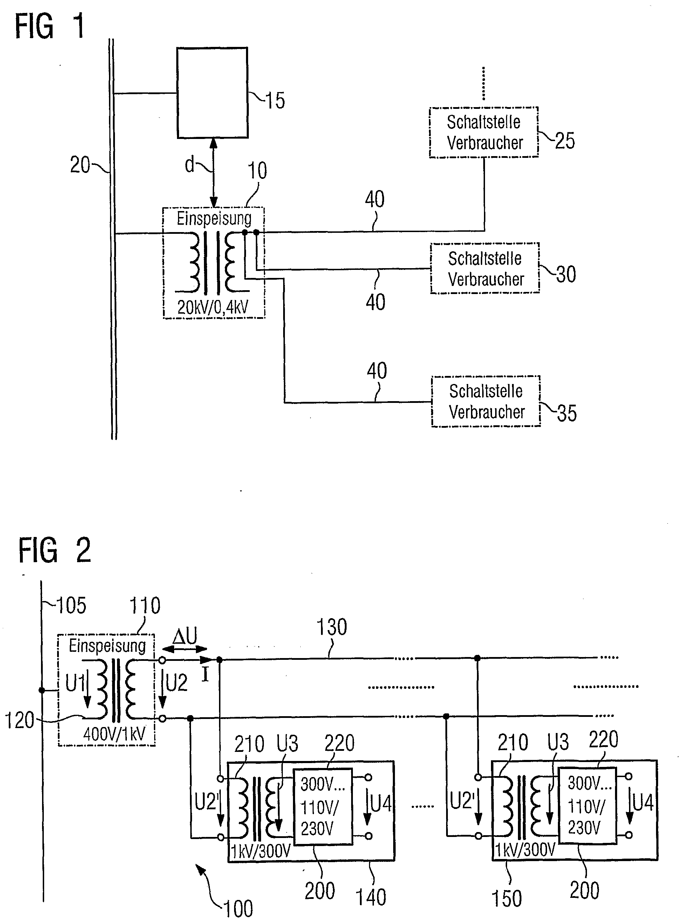

Beispielsweise sind bei der in Shanghai gebauten Transrapidstrecke eine Vielzahl an Trafostationen vorhanden, die jeweils mit einer vorgegebenen Anzahl an Fahrwegkomponenten in Form von Schaltstellen verbunden sind. Die Schaltstellen führen eine fahrzeugsynchronisierte Statorabschnittsumschaltung aus. Die Figur 1 zeigt diese Anordnung schematisch. Man erkennt in der Figur 1 zwei Trafostationen 10 und 15, die eingangsseitig an eine 20kV-Speiseleitung 20 angeschlossen sind. Bei der 20kV-Speiseleitung 20 handelt es sich beispielsweise um einen Mittelspannungskabelring, der eine Energieversorgung von Unterwerk zu Unterwerk bereitstellt. Der Abstand d der Trafostationen 10 und 15 zueinander beträgt durchschnittlich etwa 4 km. Ausgangsseitig sind die beiden Trafostationen jeweils sternförmig mit einer vorgegebenen Anzahl an Schaltstellen verbunden; die Schaltstellen der Trafostation 10 sind in der Figur 1 mit den Bezugszeichen 25, 30 und 35 gekennzeichnet. Bei den Verbindungsleitungen 40 zwischen der Trafostation und den Schaltstellen handelt es sich bei der Transrapidstrecke um Drehstromkabel, die mit einer Spannung von 400 V beaufschlagt sind.

Die Auslegung der einzelnen Verbindungsleitungen 40 erfolgt individuell nach dem maximal zu erwartenden Spannungsabfall auf der jeweiligen Leitung und muss auf die mögliche Maximallast jeder einzelnen Schaltstelle ausgelegt werden. Wegen der Anforderungen an die Schaltsicherheit der Schütze und der Überwachungselektronik der Schaltstelle sollte die zulässige Versorgungsspannungstoleranz maximal zwischen -7% und +10% der Nominalspannung liegen. Um diese Vorgabe einzuhalten, müssen die Kabelnennquerschnitte der Verbindungsleitungen 40 relativ groß bemessen werden, um dem jeweiligen Spannungsabfall über der Leitung Rechnung zu tragen. Bei einem Abstand von 2 km zwischen der Schaltstelle 25 und der Trafostation 10 kann bei Verwendung eines Kupferkabels beispielsweise ein Leiterquerschnitt von 25mm$^2$ erforderlich sein.

Die US 1,774,645 beschreibt eine Energieversorgung einer elektrifizierten Bahnstrecke. Die Energieversorgung stellt die notwendige Traktionsleistung bereit und umfasst eine Spannungsheraufsetzeinrichtung in Form eines Transformators zur Energieversorgung von Versorgungsleitungen, die sich zwischen Umspannstationen erstrecken. Jede Umspannstation ist mit einer Spannungsherabsetzeinrichtung verbunden, die ausgangsseitig mit einem Fahrdraht des Schienenweges verknüpft ist.

Die GB 2 383 696 A betrifft die Energieversorgung eines Sendemastes. Hierbei ist das Verteilungsnetz in Gestalt einer Mittelspannungsleitung mit einem ersten Transformator verbunden, der über einen Niederspannungskabel 5 mit einem zweiten Transformator verknüpft ist. Der zweite Transformator ist wiederum mit einem einzigen Sendemast verbunden.

Der Erfindung liegt die Aufgabe zugrunde, eine Anordnung der eingangs angegebenen Art dahingehend weiterzuentwickeln, dass sich diese einfacher als bisher projektieren und kostengünstiger als bisher herstellen lässt.

Diese Aufgabe wird erfindungsgemäß durch eine Anordnung mit den Merkmalen gemäß Anspruch 1 gelöst. Vorteilhafte Ausgestaltungen der Erfindung sind in Unteransprüchen angegeben.

Danach ist erfindungsgemäß vorgesehen, dass die Trafostation derart ausgestaltet ist, dass sie ausgangsseitig eine höhere Ausgangsspannung erzeugt als die angeschlossenen Fahrwegkomponenten für ihren Betrieb als Betriebsspannung benötigen, und dass die Fahrwegkomponenten jeweils mit einer Spannungsherabsetzeinrichtung ausgestattet sind, die die von der Trafostation gelieferte Versorgungsspannung auf die jeweils fahrwegkomponentenindividuell benötige Betriebsspannung herabsetzt.

Ein wesentlicher Vorteil der erfindungsgemäßen Anordnung ist darin zu sehen, dass bei dieser die Verbindungsleitungen zwischen der Trafostation und den daran angeschlossenen Fahrwegkomponenten im Hinblick auf ihre elektrische Belastung nicht individuell dimensioniert werden müssen; denn aufgrund der Tatsache, dass die Verbindungsleitungen mit einer höheren Ausgangsspannung beaufschlagt werden als die Fahrwegkomponenten tatsächlich benötigen, wird gewährleistet, dass mit einem vergleichsweise geringen Strom die erforderliche Energie übertragen werden kann. Konkret ist der erforderliche Strom umso kleiner, je größer die Versorgungsspannung gewählt ist. Je kleiner wiederum der Strom ist, umso kleiner ist auch der Spannungsabfall über der Verbindungsleitung und umso kleiner sind Schwankungen der Versorgungsspannung am Eingang der jeweiligen Fahrwegkomponente im Falle von Lastschwankungen. Aufgrund des erfindungsgemäßen Konzepts, eine größere Versorgungsspannung zu übertragen als fahrwegkomponentenseitig erforderlich ist und eine Spannungsanpassung innerhalb der Fahrwegkomponenten individuell vorzunehmen, wird der Projektierungsaufwand im Hinblick auf die Auswahl und Dimensionierung der Verbindungsleitungen deutlich geringer als bisher. Der erläuterte geringere Projektierungsaufwand spielt insbesondere dann eine sehr große wirtschaftliche Rolle, wenn während der Planungsphase oder auch nach Fertigstellung der Anlage noch bauliche Änderungen vorgenommen werden und sich dadurch die Längen der Verbindungsleitungen nachträglich ändern; denn bei der Erfindung spielen Änderungen der Leitungslänge für die Auswahl des Leitungsquerschnitts wegen der nur kleinen Versorgungsströme keine, zumindest keine wesentliche Rolle.

Ein weiterer wesentlicher Vorteil der erfindungsgemäßen Anordnung ist darin zu sehen, dass diese weniger Kosten verursacht als die vom Transrapid her vorbekannte Anordnung; denn aufgrund der kleineren Versorgungsströme auf den Verbindungsleitungen können Leitungen mit einem kleineren Querschnitt verwendet werden, so dass die Leitungskosten drastisch sinken. Zwar wird ein Teil dieses Kostenvorteils durch die fahrwegkomponentenseitig nötigen Spannungsherabsetzeinrichtungen wieder zunichte gemacht, jedoch verbleibt bei der erfindungsgemäßen Anordnung insgesamt ein deutlicher Kostenvorteil.

Um zu gewährleisten, dass die Betriebsspannung für die Fahrwegkomponenten annähernd konstant bleibt, wird es als vorteilhaft angesehen, wenn die Spannungsherabsetzeinrichtungen der Fahrwegkomponenten jeweils eine Ausregeleinrichtung aufweisen, die belastungsbedingte Schwankungen der an der jeweiligen Fahrwegkomponente anliegenden Versorgungsspannung derart ausregelt, dass eine konstante, zumindest annähernd konstante Betriebsspannung für die jeweilige Fahrwegkomponente gebildet wird.

Vorzugsweise sind die Ausregeleinrichtungen derart ausgestaltet, dass die belastungsbedingte Schwankung der an der jeweiligen Fahrwegkomponente anliegenden Versorgungsspannung im Bereich zwischen -50% und +20% des jeweiligen Nominalwertes liegt.

Um einen möglichst geringen Stromfluss in den Verbindungsleitungen zu erreichen, wird es als vorteilhaft angesehen, wenn die Ausgangsspannung zumindest doppelt so groß wie die größte erforderliche Betriebsspannung der Fahrwegkomponenten ist.

Erfindungsgemäß können zumindest zwei Fahrwegkomponenten jeweils eine Schaltstelle bilden, die mit einem streckenseitigen Statorabschnitt der Magnetschwebebahnstrecke verbunden ist und für eine fahrzeugsynchronisierte Statorabschnittsumschaltung für die Magnetschwebebahn sorgt. Die Fahrwegkomponenten können zusätzlich oder alternativ als Weichensteuerungen, Telekommunikationseinrichtungen oder Funkeinrichtungen ausgestaltet sein.

Gemäß einer ersten vorteilhaften Variante der Anordnung sind die Trafostation und die zumindest zwei Fahrwegkomponenten über ein Energiebuskabel verbunden, an das jede Fahrwegkomponente ohne eine elektrische Unterbrechung des Energiebuskabels angeschlossen ist. Ein wesentlicher Vorteil dieser Variante besteht darin, dass Leitungen und damit Investitions- und Verlegekosten eingespart werden; denn anstelle einer sternförmigen Verbindung zwischen jeder der Schaltstellen und der Trafostation ist im wesentlichen nur ein einziges Kabel erforderlich, nämlich ein solches, das sich von der Trafostation zu der entferntesten Schaltstelle erstreckt und dabei elektrisch die dazwischen liegenden Schaltstellen kontaktierend passiert. Das Energiebuskabel ist beispielsweise einphasig, um Leitungskosten zu sparen.

Gemäß einer zweiten vorteilhaften Variante der Anordnung sind die Fahrwegkomponenten elektrisch derart in einer Kette angeordnet, dass jedes durch eine Fahrwegkomponente gebildete Kettenglied mit dem jeweils vorgeordneten und dem jeweils nachgeordneten Kettenglied durch einen individuellen Kabelabschnitt verbunden ist, wobei der Kabelabschnitt zu dem nachgeordneten Kettenglied und der Kabelabschnitt zu dem vorgeordneten Kettenglied miteinander durch eine Durchschleifverbindung elektrisch verbunden sind und wobei zumindest eines der Kettenglieder elektrisch über ein Anschlusskabel mit der Trafostation verbunden ist. Vorzugsweise sind die Kabelabschnitte und das Anschlusskabel einphasig, um Leitungskosten einzusparen.

Besonders bevorzugt werden für das Energiebuskabel bzw. für die Kabelabschnitte und das Anschlusskabel vieradrige Wechselstromleitungen verwendet. Bei diesen werden vorzugsweise jeweils zwei diagonal gegenüberliegende Leiter parallel geschaltet, um die Leitungsreaktanz (Widerstand und Induktivität) zu minimieren und die Übertragungseigenschaften zu optimieren.

Besonders kostengünstig und damit vorteilhaft lassen sich die Spannungsherabsetzeinrichtungen mit Einphasen-Transformatoren, insbesondere Ringkerntransformatoren, bilden.

Die Erfindung bezieht sich außerdem auf ein Verfahren zum Versorgen zumindest zweier fahrwegbezogener Fahrwegkomponenten eines spurgeführten Fahrweges mit elektrischer Energie, bei dem die Fahrwegkomponenten elektrisch von derselben Trafostation mit einer Versorgungsspannung versorgt werden.

Um ein solches Verfahren einfach und kostengünstig durchführen zu können, wird erfindungsgemäß vorgeschlagen, dass mit der Trafostation ausgangsseitig eine höhere Ausgangsspannung erzeugt wird als die Fahrwegkomponenten für ihren Betrieb als Betriebsspannung benötigen und dass in den Fahrwegkomponenten jeweils mit einer Spannungsherabsetzeinrichtung die von der Trafostation gelieferte Versorgungsspannung auf die jeweils fahrwegkomponentenindividuell benötige Betriebsspannung herabsetzt, insbesondere herabgeregelt, wird.

Bezüglich der Vorteile des erfindungsgemäßen Verfahrens und bezüglich der Vorteile vorteilhafter Ausgestaltungen des erfindungsgemäßen Verfahrens sei auf die obigen Ausführungen im Zusammenhang mit der erfindungsgemäßen Anordnung verwiesen.

Die Erfindung wird nachfolgend anhand von Ausführungsbeispielen näher erläutert; dabei zeigen beispielhaft

Figur 2     ein Ausführungsbeispiel für eine erfindungsgemäße Anordnung mit einem Energiebuskabel, anhand derer auch das erfindungsgemäße Verfahren beispielhaft erläutert wird,

Figur 3     ein Ausführungsbeispiel für ein Energiebuskabel für die Anordnung gemäß der Figur 2 und

Figur 4     ein zweites Ausführungsbeispiel für eine erfindungsgemäße Anordnung mit einem durchgeschleiften Kabel.

In den Figuren 1 bis 4 werden aus Gründen der Übersichtlichkeit für identische oder vergleichbare Komponenten dieselben Bezugszeichen verwendet.

In der Figur 2 erkennt man eine elektrische Anordnung 100, die für eine Magnetschwebebahnstrecke verwendet werden kann. Die Anordnung 100 umfasst ein Speisenetz 105, das beispielsweise mit einer Spannung $U1 = 400$ V betrieben wird. An das Speisenetz 105 ist eine Trafostation 110 angeschlossen.

Die Trafostation 110 weist einen Transformator 120 auf, der die eingangsseitig anliegende Spannung U1 in eine höhere Ausgangsspannung U2 von beispielsweise $U2 = 1$ kV transformiert. Ausgangsseitig ist der Transformator 120 und damit die Trafostation 110 mit einem Energiebuskabel 130 verbunden, an das eine Vielzahl an Fahrwegkomponenten angeschlossen ist, von denen in der Figur 2 zwei mit den Bezugszeichen 140 und 150 gekennzeichnet sind.

Die Aufgabe des Energiebuskabels 130 besteht darin, die Fahrwegkomponenten der Magnetschwebebahnstrecke von Unterwerk zu Unterwerk mit Hilfsenergie zu versorgen.

Bei den Fahrwegkomponenten 140 und 150 kann es sich beispielsweise um Weichensteuerungen, Telekommunikationseinrichtungen, Funkeinrichtungen oder dergleichen handeln. Nachfolgend wird beispielhaft davon ausgegangen, dass es sich bei den Fahrwegkomponenten 140 und 150 jeweils um Schaltstellen handelt, die mit einem streckenseitigen Statorabschnitt der Magnetschwebebahnstrecke verbunden sind und für eine fahrzeugsynchronisierte Statorabschnittsumschaltung für die Magnetschwebebahn sorgen.

Die beiden Schaltstellen 140 und 150 weisen eingangsseitig jeweils eine Spannungsherabsetzeinrichtung 200 auf, die beispielsweise mit einem Transformator 210, insbesondere einem Ringkerntransformator ausgestattet ist. Der Transformator 210 transformiert die eingangsseitig anliegende Versorgungsspannung U2', die bis auf einen etwaigen Spannungsabfall ΔU über dem Energiebuskabel 130 der Ausgangsspannung U2 der Trafostation 110 entspricht, in eine reduzierte Versorgungsspannung U3 von beispielsweise 300 V. Der Transformator 210 ist demgemäß beispielsweise ein 1kV/300V-Transformator.

Der Transformator 210 ist ausgangsseitig mit einer Ausregeleinrichtung 220 verbunden, die zu der Spannungsherabsetzeinrichtung 200 gehört. Bei der Ausregeleinrichtung 220 kann es sich beispielsweise um eine Spannungskonstantregelschaltung (z. B. USV(USV: unterbrechungsfreie Stromversorgung) mit oder ohne Akku, Netztrafo mit Netzteil, Wechselrichter, geregelter Trafo) handeln, die einen möglichst weiten zulässigen Eingangsspannungsbereich von beispielsweise 110 V bis 300 V aufweist. Ausgangsseitig erzeugt die Ausregeleinrichtung 220 eine relativ konstante Betriebsspannung U4 von beispielsweise 230 V. Die Betriebsspannung U4 wird von übrigen Bestandteilen der Fahrwegkomponenten 140 und 150, die der Übersicht halber in der Figur 2 nicht näher gezeigt sind, weiterverarbeitet.

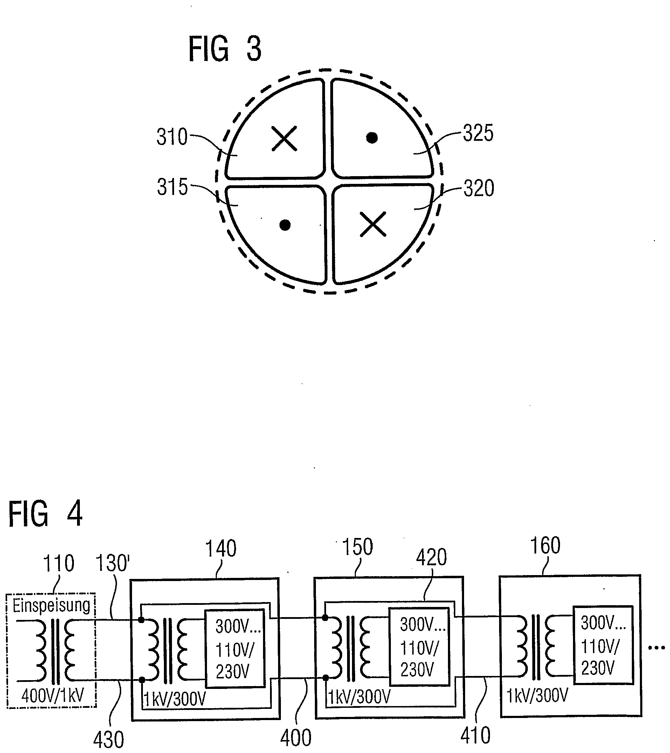

Das Energiebuskabel 130 kann beispielsweise durch ein vieradriges Kabel gebildet sein, wie es in der Figur 3 näher gezeigt ist. Das Kabel 130 weist vier Sektorleiter 310, 315, 320 und 325 auf. Diese werden vorzugsweise derart beschaltet, dass die jeweils diametral gegenüberliegenden Sektorleiter parallel geschaltet sind. Bei dem Beispiel gemäß der Figur 3 fließt der Strom der Leiter 310 und 320 somit anschaulich betrachtet in die Zeichnungsebene hinein, während der Strom der Leiter 315 und 325 anschaulich betrachtet aus der Zeichnungsebene herausfließt. Durch diese Beschaltung des Energiebuskabels 130 wird die Induktivität der Leitung verringert und die Kapazität der Leitung erhöht, so dass der Spannungsabfall über der Leitung reduziert und der Blindstrombedarf der Trafostation 110 zumindest zum Teil kompensiert wird.

Die Anordnung gemäß der Figur 2 lässt sich wie folgt betreiben:

Mit dem Speisenetz 105 wird eine Spannung U1 von beispielsweise 400 V in die Trafostation 110 eingespeist. Die Trafostation 110 transformiert die eingangsseitig anliegende Spannung U1 in eine höhere Ausgangswechselspannung U2 von beispielsweise 1 kV.

Die Ausgangsspannung U2 gelangt als Versorgungsspannung U2' zu dem Transformator 210, der die Versorgungsspannung U2' in eine reduzierte Versorgungsspannung U3 von beispielsweise 300 V umwandelt. Die Ausregeleinrichtung 220 erzeugt mit der reduzierten Versorgungsspannung U3 eine relativ konstante Betriebswechselspannung U4 von beispielsweise 230 V.

Im Falle eines sehr großen Stromes I im Energiebuskabel 130 kann ein relativ großer Spannungsabfall ΔU auf dem Energiebuskabel 130 auftreten, so dass die Versorgungsspannung U2' unter Umständen deutlich reduziert wird. Es gilt nämlich:

$$U2 = U2' + \Delta U$$

Bei der Anordnung gemäß der Figur 2 ist ein solcher Spannungsabfall ΔU erfreulicherweise sehr unkritisch, da genug "Spannungsreserve" vorhanden ist. Selbst wenn der Spannungsabfall ΔU halb so groß wie die Ausgangsspannung U2 wird, kann die Anordnung gemäß Figur 2 noch weiter arbeiten; denn die Versorgungsspannung U2' beträgt in diesem Falle immer noch 500 V, was zum Betrieb der Ausregeleinrichtung 220 ausreicht. Die Versorgungsspannung U2' = 500 V wird nämlich in dem Transformator 210 zu einer reduzierten Versorgungsspannung U3 von 150 V umgewandelt, die noch innerhalb des bereits erwähnten zulässigen Eingangsspannungsbereichs der Ausregeleinrichtung 220 zwischen 110 V und 300 V liegt.

Ein Vorteil des Energiebuskabels 130 besteht im Übrigen darin, dass durch das während des Betriebs der Magnetschwebebahn auftretende örtliche und zeitliche Weiterschalten der jeweils aktiven Schaltstelle immer nur sehr wenige der an die Trafostation 110 angeschlossenen Schaltstellen (Verbraucher) mit der vollen Leistung versorgt werden müssen, wohingegen bei den übrigen Schaltstellen (Verbrauchern) eine reduzierte Leistung für die Grundlast ausreicht. Das Energiebuskabel 130 muss also nur bezüglich dieser Belastung optimiert werden.

Bezüglich der Dimensionierung der Fahrwegkomponenten sei abschließend erwähnt, dass diese einen möglichst sinusförmigen Eingangsstrom ziehen sollten (Crestfaktor ca. 1,41), damit der Spannungsabfall auf dem Energiebuskabel 130 möglichst klein bleibt. Alternativ oder zusätzlich können die Fahrwegkomponenten mit einer aktiven PFC(Power Factor Correction)-Einrichtung ausgerüstet werden, um den Crestfaktor zu optimieren. Der Blindleistungsbedarf der Fahrwegkomponenten sollte ebenfalls möglichst klein sein.

In der Figur 4 ist ein weiteres Ausführungsbeispiel für eine Anordnung gezeigt. Im Unterschied zu dem Ausführungsbeispiel gemäß der Figur 2 ist bei dieser Anordnung kein Energiebuskabel 130 vorhanden, sondern eine durchgeschleifte Verbindungsleitung 130'. Konkret sind die Fahrwegkomponenten 140, 150 und 160 elektrisch in einer Kette angeordnet. Das mittlere Kettenglied 150 ist dabei mit dem vorgeordneten Kettenglied 140 durch einen individuellen Kabelabschnitt 400 und mit dem nachgeordneten Kettenglied 160 durch einen weiteren individuellen Kabelabschnitt 410 verbunden. Die beiden Kabelabschnitte 400 und 410 sind miteinander durch eine Durchschleifverbindung 420 innerhalb oder außerhalb des Kettengliedes 150 elektrisch verbunden. Zumindest eines der Kettenglieder, hier das Kettenglied 140, ist elektrisch über ein Anschlusskabel 430 mit der Trafostation 110 verbunden.

An das Kettenglied 160 können selbstverständlich noch weitere Kettenglieder in entsprechender Weise angeschlossen werden, wie dies durch Punkte rechts vom Kettenglied 160 in der Figur 4 schematisch angedeutet wird.

Erwähnt sei außerdem, dass die Fahrwegkomponenten 140 und 150 gemäß der Figur 2 und die Fahrwegkomponenten 140, 150 und 160 gemäß der Figur 4 unterschiedlich ausgestaltet sein können und beispielsweise unterschiedliche Spannungen U3 und U4 erzeugen und verarbeiten.

Bezugszeichenliste

| 10,20 | Trafostationen |
| 20 | Speiseleitung |
| 25,30,35 | Schaltstellen |
| 40 | Verbindungsleitungen |
| 100 | Anordnung |
| 105 | Speisenetz |
| 110 | Trafostation |
| 120 | Transformator |
| 130 | Energiebuskabel |
| 140,150,160 | Fahrwegkomponenten |
| 200 | Spannungsherabsetzeinrichtung |
| 210 | Transformator |
| 220 | Ausregeleinrichtung |
| 310,315 | Sektorleiter |
| 320,325 | Sektorleiter |
| 400,410 | Kabelabschnitt |
| 420 | Durchschleifverbindung |
| 430 | Anschlusskabel |
| | |
| U1,U2,U2',U3 | Spannungen |
| I | Strom |
| d | Abstand |

**Patentansprüche**

1.   Anordnung (100) mit zumindest zwei fahrwegbezogenen Fahrwegkomponenten (140, 150) eines spurgeführten Fahrweges sowie mit einer Trafostation (110), die mit den zumindest zwei Fahrwegkomponenten elektrisch in Verbindung steht und diese zur elektrischen Energieversorgung mit einer Ausgangsspannung (U2) versorgt,

    - wobei die Trafostation derart ausgestaltet ist, dass sie ausgangsseitig eine höhere Ausgangsspannung erzeugt als die angeschlossenen Fahrwegkomponenten für ihren Betrieb als Betriebsspannung (U4) benötigen,
    - wobei die Fahrwegkomponenten jeweils mit einer Spannungsherabsetzeinrichtung (200) ausgestattet sind, die die von der Trafostation gelieferte Versorgungsspannung (U2') auf die jeweils fahrwegkomponentenindividuell benötige Betriebsspannung herabsetzt
    **dadurch gekennzeichnet dass** die Fahrwegkomponenten
    - Schaltstellen (140, 150) bilden, die mit einem streckenseitigen Statorabschnitt der Mag-

netschwebahnstrecke verbunden ist und für eine fahrzeugsynchronisierte Statorabschnittsumschaltung für die Magnetschwebebahn sorgen oder

- durch eine Weichensteuerung, eine Telekommunikationseinrichtung oder eine Funkeinrichtung gebildet sind.

2. Anordnung nach Anspruch 1,
**dadurch gekennzeichnet, dass**
die Spannungsherabsetzeinrichtungen der Fahrwegkomponenten jeweils eine Ausregeleinrichtung (220) aufweisen, die belastungsbedingte Schwankungen der an der jeweiligen Fahrwegkomponente anliegenden Versorgungsspannung derart ausregelt, dass eine konstante, zumindest annähernd konstante Betriebsspannung für die jeweilige Fahrwegkomponente gebildet wird.

3. Anordnung nach Anspruch 1 oder 2,
**dadurch gekennzeichnet, dass**
die Ausregeleinrichtung derart ausgestaltet ist, dass die belastungsbedingten Schwankungen der an der jeweiligen Fahrwegkomponente anliegenden Versorgungsspannung im Bereich zwischen -50% und +20% des jeweiligen Nominalwertes ausgeglichen werden.

4. Anordnung nach einem der voranstehenden Ansprüche,
**dadurch gekennzeichnet, dass**
die Anordnung zur elektrischen Hilfsenergieversorgung einer Magnetschwebebahnstrecke eingesetzt ist.

5. Anordnung nach einem der voranstehenden Ansprüche,
**dadurch gekennzeichnet, dass**
die Trafostation und die zumindest zwei Fahrwegkomponenten über ein Energiebuskabel (130) verbunden sind, an das jede Fahrwegkomponente ohne eine elektrische Unterbrechung des Energiebuskabels angeschlossen ist.

6. Anordnung nach Anspruch 5,
**dadurch gekennzeichnet, dass**
das Energiebuskabel einphasig ist.

7. Anordnung nach einem der voranstehenden Ansprüche 1 bis 4,
**dadurch gekennzeichnet, dass**
die Fahrwegkomponenten elektrisch derart in einer Kette angeordnet sind, dass jedes durch eine Fahrwegkomponente gebildete Kettenglied (140, 150, 160) mit dem jeweils vorgeordneten und dem jeweils nachgeordneten Kettenglied durch einen individuellen Kabelabschnitt (400, 410) verbunden ist,

- wobei der Kabelabschnitt zu dem nachgeordneten Kettenglied und der Kabelabschnitt zu dem vorgeordneten Kettenglied miteinander durch eine Durchschleifverbindung (420) elektrisch verbunden sind und
- wobei zumindest eines der Kettenglieder elektrisch über ein Anschlusskabel (430) mit der Trafostation verbunden ist.

8. Anordnung nach einem der voranstehenden Ansprüche, **dadurch gekennzeichnet, dass** die Spannungsherabsetzeinrichtung zumindest einer der Fahrwegkomponenten einen Transformator (210), insbesondere einen Ringkerntransformator, aufweist.

9. Verfahren zum Versorgen zumindest zweier fahrwegbezogener Fahrwegkomponenten (140, 150) eines spurgeführten Fahrweges mit elektrischer Energie, bei dem die Fahrwegkomponenten elektrisch von derselben Trafostation (110) mit einer Versorgungsspannung (U2) versorgt werden,

- wobei mit der Trafostation ausgangsseitig eine höhere Ausgangsspannung erzeugt wird als die Fahrwegkomponenten für ihren Betrieb als Betriebsspannung (U4) benötigen und
- wobei in den Fahrwegkomponenten jeweils mit einer Spannungsherabsetzeinrichtung (200) die von der Trafostation gelieferte Versorgungsspannung auf die jeweils fahrwegkomponentenindividuell benötige Betriebsspannung herabsetzt,

**dadurch gekennzeichnet,**
**dass** die Fahrwegkomponenten Schaltstellen(140, 150) bilden, die mit einem streckenseitigen Statorabschnitt der Magnetschwebebahnstrecke verbunden ist und für eine fahrzeugsynchronisierte Statorabschnittsumschaltung für die Magnetschwebebahn sorgen oder durch eine Weichensteuerung, eine Telekommunikationseinrichtung oder eine Funkeinrichtung gebildet sind.

**Claims**

1. System (100) comprising at least two guideway-related guideway components (140, 150) of a track guideway and a transformer station (110) which is electrically connected to the at least two guideway components and supplies them with an output voltage (U2) for their electrical power supply,

- wherein the transformer station is configured in such a way that it generates, on the output side, a higher output voltage than the connected guideway components require as an operating voltage (U4) for their operation,
- wherein the guideway components are each equipped with a voltage reducing device (200) which reduces the supply voltage (U2') supplied by the transformer station to the operating voltage which is respectively required by the individual guideway components,

**characterized in that** the guideway components form switching - points (140, 150) which are connected to a trackside stator section of the magnetic levitation rail track and ensure switching over of the stator section for the section of magnetic levitation rail track in synchronism with the vehicle or

- are formed by a switch controller, a telecommunications device or a radio device.

2. System according to Claim 1, **characterized in that** the voltage reducing devices for the guideway components each have a compensation device (220) which compensates load-induced fluctuations in the supply voltage present at the respective guideway component in such a way that a constant, at least approximately constant, operating voltage is formed for the respective guideway component.

3. System according to Claim 1 or 2, **characterized in that** the compensation device is configured in such a way that the load-induced fluctuations in the supply voltage which is present at the respective guideway component are compensated in the range between -50% and +20% of the respective nominal value.

4. System according to one of the preceding claims, **characterized in that** the system is used to supply electrical auxiliary power to a section of a magnetic levitation rail track.

5. System according to one of the preceding claims, **characterized in that** the transformer station and the at least two guideway components are connected by means of a power bus cable (130) to which each guideway component is connected without an electrical interruption in the power bus cable.

6. System according to Claim 5, **characterized in that** the power bus cable is single-phase.

7. System according to one of the preceding Claims 1 to 4, **characterized in that** the guideway components are arranged electrically in a chain in such a way that each chain element (140, 150, 160) which is formed by a guideway component is connected by an individual cable section (400, 410) to the chain element which is respectively arranged in front of it and the chain element which is respectively arranged after it,

- wherein the cable section for the chain element arranged after and the cable section for the chain element arranged in front are electrically connected to one another by means of a looped-through connection (420), and
- wherein at least one of the chain elements is electrically connected to the transformer station by means of a connecting cable (430).

8. System according to one of the preceding claims, **characterized in that** the voltage reducing device of at least one of the guideway components has a transformer (210), in particular an annular core transformer.

9. Method for supplying at least two guideway-related guideway components (140, 150) of a track guideway with electrical energy, in which the guideway components are supplied electrically with a supply voltage (U2) from the same transformer station (110),

- wherein the transformer station is used to generate, on the output side, a higher output voltage than the guideway components require as an operating voltage (U4) for their operation, and
- wherein, in the guideway components, the supply voltage which is supplied by the transformer station respectively reduces with a voltage reducing device (200) to the operating voltage which is respectively required by the individual guideway components,

**characterized in that** the guideway components form switching - points (140, 150) which are connected to a trackside stator section of the magnetic levitation rail track and ensure switching over of the stator section for the section of magnetic levitation rail track in synchronism with the vehicle or

- are formed by a switch controller, a telecommunications device or a radio device.

**Revendications**

1. Dispositif (100), comprenant au moins deux composants (140, 150) de voie liés à la voie d'une voie à rails, ainsi qu'un poste (110) de transformateur, qui est en liaison électriquement avec les au moins deux composants de voie et les alimente en une tension (U2) de sortie pour l'alimentation en énergie électrique,

- dans lequel le poste de transformateur est conformé, de manière à produire, du côté de la sortie, une tension de sortie plus haute qu'il est nécessaire comme tension (U4) de fonctionnement pour le fonctionnement des composants de voie raccordés,

- dans lequel les composants de voie sont équipés, respectivement, d'un dispositif (200) abaisseur de tension, qui abaisse la tension (U2') d'alimentation fournie par le poste de transformateur à la tension de fonctionnement nécessaire individuellement aux composants de voie,

**caractérisé en ce que**
les composants de voie

- forment des points (140, 150) de commutation, qui sont reliés à une partie de stator du côté de la voie à sustentation magnétique et qui servent à une commutation de la partie de stator synchronisée au véhicule pour la voie à sustentation magnétique ou
- par une commande d'aiguillage, il est formé un dispositif de télécommunication ou un dispositif radio.

2. Dispositif suivant la revendication 1,
   **caractérisé en ce que**
   les dispositifs abaisseurs de tension des composants de voie ont respectivement un dispositif (220) de régulation, qui régule des fluctuations dues à la charge de la tension d'alimentation s'appliquant aux composants de voie respectifs, de manière à former, pour les composants de voie respectifs, une tension de fonctionnement constante, ou au moins à peu près constante.

3. Dispositif suivant la revendication 1 ou 2,
   **caractérisé en ce que**
   le dispositif de régulation est conformé, de manière à compenser les fluctuations dues à la charge de la tension d'alimentation s'appliquant aux composants de voie respectifs, dans la plage comprise entre -50% et +20% de la valeur nominale respective.

4. Dispositif suivant l'une des revendications précédentes,
   **caractérisé en ce que**
   le dispositif est utilisé pour l'alimentation en énergie électrique auxiliaire d'une voie à sustentation magnétique.

5. Dispositif suivant l'une des revendications précédentes,
   **caractérisé en ce que**
   le poste de transformateur et les au moins deux composants de voie sont reliés par un câble (130) de bus d'énergie, auquel chaque composant de voie est raccordé sans une interruption électrique du câble de bus d'énergie.

6. Dispositif suivant la revendication 5,

**caractérisé en ce que**
le câble de bus d'énergie est monophasé.

7. Dispositif suivant l'une des revendications précédentes 1 à 4,
   **caractérisé en ce que**
   les composants de voie sont montés électriquement en une chaîne, de manière à ce que chaque maillon (140, 150, 160) de la chaîne formée par un composant de voie soit relié aux maillons de la chaîne le précédant et le suivant par un tronçon (400, 410) de câble individuel,

   - dans lequel le tronçon de câble allant au maillon de la chaîne suivant et le maillon de câble allant au maillon de la chaîne précédent est relié entre eux électriquement par une liaison (420) à contact glissant et
   - dans lequel au moins l'un des maillons de la chaîne est relié électriquement au poste de transformateur par un câble (430) de connexion.

8. Dispositif suivant l'une des revendications précédentes,
   **caractérisé en ce que**
   le dispositif abaisseur de tension d'au moins l'un des composants de voie a un transformateur (210), notamment un transformateur à noyau en anneau.

9. Procédé d'alimentation en énergie électrique d'au moins deux composants (140, 150) de voie, liés à la voie, d'une voie à rails, dans lequel les composants de voie sont alimentés électriquement en une tension (U2) d'alimentation par le même poste (110) de transformateur,

   - dans lequel on produit, par le poste de transformateur du côté de la sortie, une tension de sortie plus haute que la tension (U4) de fonctionnement que nécessite le fonctionnement des composants de voie,
   - dans lequel on abaisse, dans les composants de voie, respectivement par un dispositif (200) abaisseur de tension, la tension d'alimentation fournie par le poste de transformateur, à la tension de fonctionnement nécessaire individuellement aux composants de voie,

   **caractérisé en ce que** les composants de voie

   - forment des points (140, 150) de commutation, qui sont reliés à une partie de stator du côté de la voie à sustentation magnétique et qui servent à une commutation de la partie de stator, synchronisée du véhicule, pour la voie à sustentation magnétique ou
   - par une commande d'aiguillage, il est formé un dispositif de télécommunication ou un dispositif

radio.

EP 2 021 205 B1

FIG 1

FIG 2

10

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1774645 A
- GB 2383696 A